# EUROPEAN PATENT APPLICATION

(11) **EP 2 608 506 A1**
(43) Date of publication of application: **26.06.2013**
(21) Application number: 12194415.1
(22) Date of filing: 27.11.2012
(51) Int. Cl.: H04M 3/493

(54) **A System And Method For Developing and monitoring IVR dialogs**

(30) Priority: 01.12.2011 TR 201111907
(71) Applicant: KREA ICERIK HIZMETLERI VE PRODUKSIYON ANONIM SIRKETI, Istanbul (TR)
(72) Inventor: Karademir, Ramazan, 34353 ISTANBUL (TR); Kula, Nefise, 34353 ISTANBUL (TR)
(74) Representative: Iskender, Ibrahim

(57) **Abstract**

This invention is related to a call center system and method for designing, changing, reporting, monitoring and administrating every IVR scenarios developed for IVR systems used in the call center. The object of this invention is to achieve a system and method providing taking to live medium the IVR (interactive voice response) scenarios needed in the call centers by business units, after developing, testing and providing performance monitoring of said scenarios.

## Description

### Technical Field

This invention is related to a call center system and method for designing, changing, reporting, monitoring and administrating every IVR scenarios developed for IVR (Interactive Voice Response) systems running with VoiceXML output used in call center.

### Prior Art

In English patent document numbered GB 2377119 (A) is related to access to the incoming call or message to the call center through software (text-to-voice converter) vocalizing the transcript of the text such as the human voice or through phone. The system consists of interactive voice response system (IVR) identifying the commands, and formed to send conversation or in some cases other voices. Flow in the desired language is provided due to received text messages, menu selection of the customers by phone or dialing made for data entry. There is also a database in the interactive voice response system including phone numbers and e-mail addresses of the customers. Furthermore, the system automatically communicates with the source of the message and plays the recorded message due to customer recording any reply message in the system.

The US patent numbered US 2006256939 (A1) is related to interactive voice response system with computer database and capable of processing according to the customer's wishes and needs. The method includes a call flow configuration comprising more than one call flow network within the framework of a predetermined interactive voice response system. These call flow networks include different network types changeable with each other according to the flow merger call. Different network types include at least one standard network and at least one preprogrammed designer tool kit module. These modules include an application separate from predetermined interactive voice response systems. Call flow is stored together with the customer's identity and is given as a reply to the incoming call in the interactive voice response system customized according to the customer.

The international patent document numbered WO 2005011242 (A1) is related to using form of speech to explain text message over an audio connection. It allows making new additions to incoming text messages and translating the incoming text message, namely transcript of the message, to spoken language using a software (text-to-speech) vocalizing like human voice. This system consists of a text to speech system (TTS), an automatic speech recognition (ASR) system, an interactive voice response (IVR) system and a system of executing office document applications in unified messaging system mutually interacting.

### Brief Description of the Invention

The object of this invention is to achieve a system and method providing taking to live medium the IVR (interactive voice response) scenarios needed in the call centers by business units, after developing and testing said scenarios.

Another object of this invention is to achieve a system and method to transfer the changes made on the scenarios without interrupting system operation, to the live medium.

Another object of this invention is to achieve a system and method to control logically the changes made on the scenarios and to prevent transfer of the scenario to the live media if there is a mistake in the scenarios.

Another object of this invention is to provide automatically reporting frequencies of use of the scenario and the steps in the scenario.

Another object of this invention is to provide running of the steps defined on the scenarios depending on the rules defined.

### Detailed Description of the Invention

"A system and method for developing the call centers" which realized in order to achieve the objects of the invention is shown in the enclosed figures, and;
Figure 1 is the schematic block diagram of the system.

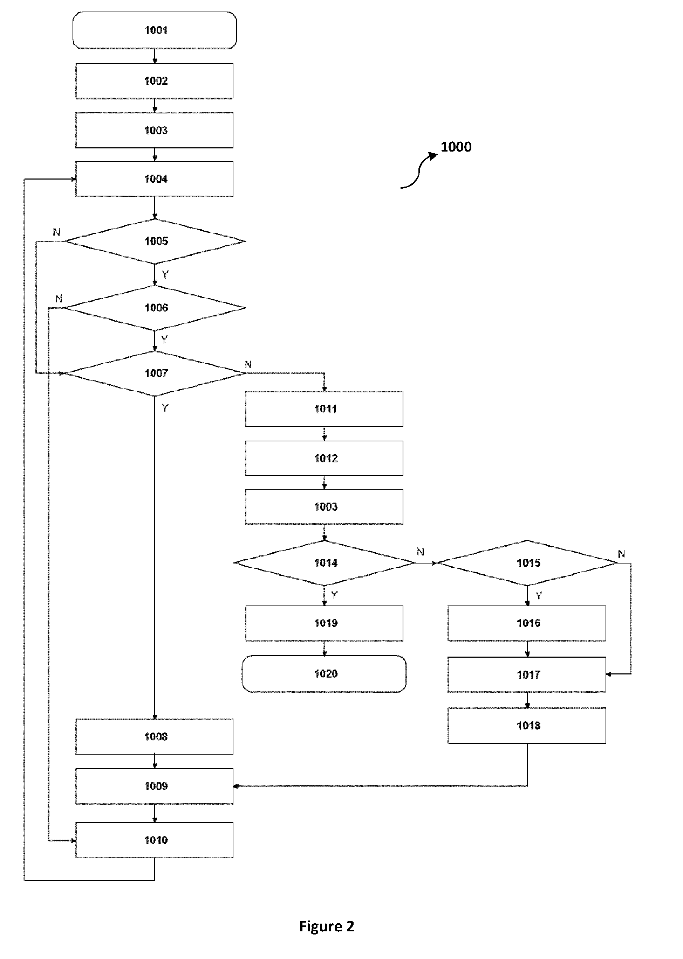

Figure 2 is the flow chart of the method.

Parts in the figures are enumerated and equivalents of these numbers are given below.
1. System
2. VoiceXML producer
3. Motor unit
4. Database
5. Recording unit
6. Central unit
7. IVR unit
   1000. Method
   1001. Login for the incoming call by VoiceXML actuator and demanding VoiceXML output from VoiceXML producer
   1002. Login Diva by VoiceXML producer and transferring the session information to the motor unit
   1003. Finding the first step of the scenario by the motor unit
   1004. Running the scenario step by the motor unit
   1005. Questioning whether the working rule for the step is defined or not
   1006. Questioning whether the definition of the working rule is verified or not
   1007. Questioning whether the scenario step is the motor unit action or not
   1008. Running the action step by the motor unit
   1009. Writing the action step and its results to the database for reporting by the motor unit
   1010. Finding the next action step by the motor unit
   1011. Sending the action step to VoiceXML producer by the motor unit
   1012. Production of VoiceXML output and sending to the Voice XML actuator by VoiceXML producer
   1013. Running the VoiceXML output by the VoiceXML actuator
   1014. Questioning if the call is terminated or not during VoiceXML running
   1015. Questioning if the user will login or not during VoiceXML running
   1016. Taking the values entered to the system variables by VoiceXML actuator
   1017. Demanding the next VoiceXML output from VoiceXML producer together with the system values by VoiceXML actuator
   1018. Demanding the next step from the motor unit together with the system values by VoiceXML producer
   1019. Logout the Diva and sending the logoff message to the motor unit by VoiceXML producer
   1020. Writing the logoff message to the database for reporting and logoff by the motor unit

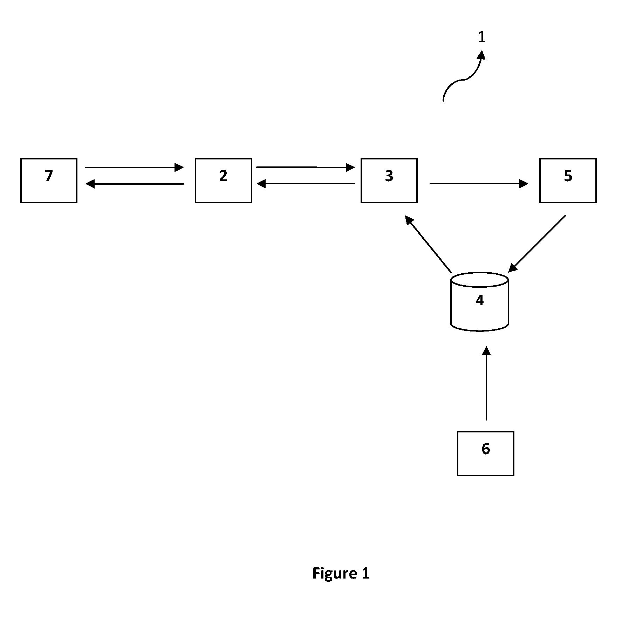

A system (1) providing designing, changing, reporting, monitoring and administrating every IVR (interactive voice response) scenarios running with VoiceXML output developed for IVR systems used in the call center, and it comprises;
- At least one VoiceXML producer (2) first responding to incoming calls and forming an output according to the way to be followed for the incoming calls comprising;
- At least one IVR unit (7) (in other words VoiceXML actuator) running the VoiceXML output formed by the VoiceXML producer (2),
- At least one motor unit (3) determining which number is called, which scenario is to be run, which steps of the scenario will be carried out according the demand coming from the VoiceXML producer (2) unit and having at least one secondary database (not shown in the figures),
- At least a database (4) storing the scenario information and recording scenario usage information,
- At least one recording unit (5) providing the recording of the IVR scenario steps sent to the VoiceXML producer (2) unit by the motor unit (3), to the database (4); and
- At least a central unit (6) in which call center managers or authorized persons design the parameters, scenario flows and business rules, form, test and transfer the report codes to live medium (Figure 1).

VoiceXML producer unit (2) produces a dynamic scenario consisting of parametric routines run by the motor unit (3) for every incoming, outgoing and/or internal IVR calls formed in the call center. Any call started in the IVR unit (7) is matched with a recorded scenario after transferred to the motor unit (3). From this point, the VoiceXML producer unit (2) is communicated with the motor unit (3) in a loop till the call is ended in the IVR unit (7). Firstly, call information, caller ID information (ANI-Automatic Number Identification), incoming source point (VDN-Vector Directory Number) information and call data if present, are sent to the motor unit (3) together.

The VR unit (7) starts-up automatically by an incoming call to the call center and assigns a port (gate) to the call center. Then, a section ID (session identity) is formed for the said call by the IVR unit (7) and said section ID is transferred to the VoiceXML producer (2) together with the other call data (caller ID, incoming source point). The VoiceXML producer (2) forms a section (session) for the section ID sent by the IVR unit (7). The VoiceXML producer (2) asks the motor unit (3) which way to be followed for the formed session.

The motor unit (3) decides which number will be called and which steps will be performed by looking at the incoming call data from the VoiceXML producer (2) unit. The motor unit (3) takes the information related to the scenario to be applied, from its own memory, namely from a secondary database (not shown in the figures) in the motor unit (3). The motor unit (3) loads all the scenarios defined in the database (4) during system (1) startup for once. The motor unit (3) sends the scenario information to be applied to the VoiceXML producer (2) by taking from its own memory by a questioning. If the step to be carried out is an action to be run in the IVR unit (7), the motor unit (3) requests from the IVR unit (7) together with the necessary action parameters. The IVR unit (7) runs the step and returns the result again to the VoiceXML producer (2). For each step, the motor unit (3) transfers the information to the recording unit (5) at various intervals.

The VoiceXML producer (2) forms text files (VoiceXML output) according to the data taken from the motor unit (3). The VoiceXML output formed by the VoiceXML producer (2), is transferred to the IVR unit (7) by the VoiceXML producer (2). The IVR unit (7) runs an announcement according to the incoming text files.

The recording unit (5) writes the IVR scenario steps to the database (4) by reading respectively sent by the motor unit (3). In case that the database (4) is not accessible, the recording unit (5) sends the related warning messages to the authorized persons by SMS (Short Message Service) or e-mail. When the database (4) is not accessible, the recording unit (5) provides safe storage of the messages coming from the motor unit (3). In a preferred application of the invention, the messages are stored in the message queues by using Microsoft Messaging Queue substructure. When access to the database (4) is started again, the messages are written to the database (4) in the correct order again.

The central unit (6) is a graphical user interface (GUI) medium in which, the user can process according to its roles like manager and viewer, all parameters, scenario flows and business rules related to the system are designed, operations are carried out for testing and transferring to live, instant system status can be monitored and the system reports can be received. In a preferred application of the invention, the central unit (6) is a desktop application to be run in the computers. In another application of the invention, the central unit (6) is an application used in mobile devices like mobile phone and pocket PC.

A method (1000) for designing, changing, reporting, monitoring and administrating every IVR scenarios developed for IVR systems used in the call center, and it comprises the following process steps;
- Logging in for the incoming call to the IVR unit (7) and demanding an output from the VoiceXML producer (2) related to the way to be followed (1001),
- Logging of the VoiceXML producer's (2) in and sending the formed session information to the motor unit (3) (1002),
- Determining the first step of the scenario by the motor unit (3) (1003),
- Running the scenario step by the motor unit (3) (1004),
- Checking if working rule for the step is defined or not (1005),
- If working rule for the step is defined, checking if running rule definition is verified or not (1006),
- If the running rule definition is verified, checking if the scenario step is a motor unit (3) action or not (1007),
- Directly going to the step of checking if the scenario step is a motor unit (3) action or not (1007), if the working rule in 1005 step is not defined,
- Running the action step by the motor unit (3) if the scenario step is a motor unit (3) action (1008),
- Writing the action step and its results to the database (4) for reporting, by the motor unit (3) (1009),
- Finding the next action step and then returning to running step of the scenario step (1004) by the motor unit (3) (1010),
- Directly going to the step of finding next action step (1010) by the motor unit (3) if the working rule definition is not verified in step 1006,
- Sending the action step to the VoiceXML producer (2) by the motor unit (3) if it is understood that the scenario step in (1007) step is not a motor unit (3) action (1011),
- Producing VoiceXML output and sending the output to the IVR unit (7) by the VoiceXML producer (2) (1012),
- Running of the VoiceXML output by the IVR unit (7) (1013),
- Checking if the call is off or not during the running of the VoiceXML output (1014),
- Checking if the user enters or not during the running of the VoiceXML if the call is not off (1015),
- Taking the entered values of the IVR unit (7) to the system variables if the user enters (1016),
- Demanding system variables and the next VoiceXML output formed in the VoiceXML producer (2) by the IVR unit (7) (1017),
- Directly going on to step 1017 if it is determined that the user will not enter during running of the VoiceXML in step 1015,
- Demanding the next step from the motor unit (3) together with the system values of the VoiceXML producer (2) (1018) and then returning to step of writing the action step and its results to the database by the motor unit (3) (1009),
- The VoiceXML producer's (2) log out and sending the log out message to the motor unit (3) if it is understood that the call is off in step 1014 (1019),
- Writing the log out message to the database (4) for reporting and log out by the motor unit (3) (1020).

The method (1000) of the invention starts up with catching the incoming call to the call center by the IVR unit (7), logging in for said call and demanding an output about the way to be followed from the VoiceXML producer (2) (1001). The VoiceXML producer (2) logs in according to the demand from the IVR unit (7) and transfers the log in information to the motor unit (3) (1002). The motor unit (3) runs the scenario step (1004) by finding first step of the suitable scenario according to the data coming to itself (1003). The motor unit (3) is checking if there is a working rule or not for the running scenario step (1005). If there is a working rule for the running scenario step, it is checked if the working rule definition is verified or not by the motor unit (3) (1006). If working rule definition is verified, it is checked if the scenario step is a motor unit (3) action or not (1007). During checking if a working rule is defined or not for the scenario step (1005), if it is determined that a working rule is not defined, it is directly passed to the process of checking if the scenario step is a motor unit (3) action or not (1007). If the scenario step is a motor unit (3) action, this action is run by the motor unit (3) (1008). After running the action step (1008), this action step and its results are written to the database (4) by the motor unit (3) for reporting (1009). Then, the motor unit (3) finds the next action step (1010) and returns to the running process of the scenario step (1004). While checking if the working rule is verified or not (1006), if it is determined that the working rule is not verified, it is passed to directly the process of finding the next scenario step by the motor unit (3) (1010) and then the scenario step is run by the motor unit (3) (1004). At the end of the checking (1007) if the scenario step is a motor unit (3) action or not; if it is understood that the scenario step is not a motor unit (3) action, then the scenario step is sent to the VoiceXML producer (2) by the motor unit (1011). The VoiceXML producer (2) produces a VoiceXML output according to the scenario step sent to it and sends said output to the IVR unit (7) (1012). IVR unit (7) runs the output coming from the VoiceXML producer (2) (1013) and it is checked if the call is off or not (1014). If the call is not off, it is checked if the user will enter or not during the running of the VoiceXML output (1015). If the user will enter, the IVR unit (7) transfers the values entered by the user, to the system (1016). Then, the IVR unit (7) demands the next VoiceXML output together with the system values from the VoiceXML producer (2) (1017). If it is determined that the user will not enter during running of VoiceXML, the IVR unit (7) directly demands the next VoiceXML output together with the system values from the VoiceXML producer (2) (1017). The VoiceXML producer (2), according to the demand from the IVR unit (7), requests the next step from the motor unit (3) together with the system values (1018); and it is returned to the process of writing action steps and its results to the database (4) by the motor unit (3) (1009). If it is understood that the call is off at the end of checking (1014) if the call is off or not during running of the VoiceXML, the VoiceXML producer (2) logs out and sends the log out message to the motor unit (3) (1019). The motor unit (3) logs out by writing the incoming log out message to the database (4) (1020).

Developing various applications of the system (1) and the method (1000) is possible, but the invention can't be limited with the examples described here and mainly it is as indicated in the claims.

## Claims

1. A method (1000) for designing, changing, reporting, monitoring and administrating every IVR scenarios developed for IVR systems used in the call center, **characterized in that** it comprises the following process steps;
- Logging in for the incoming call to the IVR unit (7) and demanding an output from the VoiceXML producer (2) related to the way to be followed (1001),
- Logging of the VoiceXML producer's (2) in and sending the formed session information to the motor unit (3) (1002),
- Determining the first step of the scenario by the motor unit (3) (1003),
- Running the scenario step by the motor unit (3) (1004),
- Checking if working rule for the step is defined or not (1005),
- If working rule for the step is defined, checking if working rule definition is verified or not (1006),
- If the working rule definition is verified, checking if the scenario step is a motor unit (3) action or not (1007),
- Directly going to the step of checking if the scenario step is a motor unit (3) action or not (1007), if the running rule in 1005 step is not defined,
- Running the action step by the motor unit (3) if the scenario step is a motor unit (3) action (1008),
- Writing the action step and its results to the database (4) for reporting, by the motor unit (3) (1009),
- Finding the next action step and then returning to running step of the scenario step (1004) by the motor unit (3) (1010),
- Directly going to the step of finding next action step (1010) by the motor unit (3) if the running rule definition is not verified in step 1006,
- Sending the action step to the VoiceXML producer (2) by the motor unit (3) if it is understood that the scenario step in (1007) step is not a motor unit (3) action (1011),
- Producing VoiceXML output and sending the output to the IVR unit (7) by the VoiceXML producer (2) (1012),
- Running of the VoiceXML output by the IVR unit (7) (1013),
- Checking if the call is off or not during the running of the VoiceXML output (1014),
- Checking if the user enters or not during the running of the VoiceXML if the call is not off (1015),
- Taking the entered values of the IVR unit (7) to the system variables if the user enters (1016),
- Demanding system variables and the next VoiceXML output formed in the VoiceXML producer (2) by the IVR unit (7) (1017),
- Directly going on to step 1017 if it is determined that the user will not enter during running of the VoiceXML in step 1015,
- Demanding the next step from the motor unit (3) together with the system values of the VoiceXML producer (2) (1018) and then returning to step of writing the action step and its results to the database by the motor unit (3) (1009),
- The VoiceXML producer's (2) log out and sending the log out message to the motor unit (3) if it is understood that the call is off in step 1014 (1019),
- Writing the log out message to the database (4) for reporting and log out by the motor unit (3) (1020).

2. A system (1) providing designing, changing, reporting, monitoring and administrating every IVR (interactive voice response) scenarios running with VoiceXML output developed for IVR systems used in the call center, comprising;
- At least a database (4) storing the scenario information and recording scenario usage information,
and **characterized in that**, it comprises;
- At least one VoiceXML producer (2) first responding to incoming calls and forming an output according to the way to be followed for the incoming calls,
- At least one IVR unit (7) (in other words VoiceXML actuator) running the VoiceXML output formed by the VoiceXML producer (2),
- At least one motor unit (3) determining which number is called, which scenario is to be run, which steps of the scenario will be carried out according the demand coming from the VoiceXML producer (2) unit and having at least one secondary database (not shown in the figures),
- At least one recording unit (5) providing the recording of the IVR scenario steps sent to the VoiceXML producer (2) unit by the motor unit (3), to the database (4); and
- At least a central unit (6) in which call center managers or authorized persons design the parameters, scenario flows and business rules, form, test and transfer the report codes to live medium.

3. A system (1) according to Claim 2, **characterized in that** a VoiceXML producer unit (2) produces a dynamic scenario consisting of parametric routines run by the motor unit (3) for every incoming, outgoing and/or internal IVR (Interactive Voice Response) calls formed in the call center.

4. A system (1) according to Claim 2 or 3, **characterized in that** an IVR unit (7) is activated automatically by an incoming call to call center.

5. A system (1) according to Claims 2 to 4, **characterized in that** IVR unit (7) assignes a port (gate) for call incoming to call center.

6. A system (1) according to Claims 2 to 5, **characterized in that** IVR unit (7) formes a section ID (session ID) for incoming call.

7. A system (1) according to Claims 2 to 6, **characterized in that** VoiceXML producer (2) formes a section (session) for section ID sent by IVR unit (7).

8. A system (1) according to Claims 2 to 7, **characterized in that** VoiceXML producer (2) forms output in accordance with the data taken from the motor unit (3).

9. A system (1) according to Claims 2 to 8, **characterized in that** a motor unit (3) comprises at least one secondary database.

10. A system (1) according to Claims 2 to 9, **characterized in that** the central unit (6) is a desktop application that can be run on computers.

11. A system (1) according to Claims 2 to 9, **characterized in that** the central unit (6) is an application used in mobile devices like mobile phone and pocket PC.
